# EUROPEAN PATENT APPLICATION

(11) **EP 2 458 856 A1**
(43) Date of publication of application: **30.05.2012**
(21) Application number: 10802175.9
(22) Date of filing: 07.07.2010
(51) Int. Cl.: H04N 7/173, H04N 5/445

(54) **PROGRAM INFORMATION RETRIEVAL DEVICE**

(30) Priority: 23.07.2009 JP 2009172257
(71) Applicant: Sharp Kabushiki Kaisha, Osaka-shi, Osaka 545-8522 (JP)
(72) Inventor: ITOH, Atsushi, Osaka-shi, Osaka 545-8522 (JP); SASAKI, Jun, Osaka-shi, Osaka 545-8522 (JP)
(74) Representative: Müller - Hoffmann & Partner
(86) International application number: PCT/JP2010/061523
(87) International publication number: WO 2011/010555

(57) **Abstract**

Provided is a program information search device having an improved operability of genre search. The program information search device includes: an electronic program table creating means 105 for creating an electronic program table which displays information on programs, and a genre search screen; a program information acquiring means 110a for acquiring information on a program where a cursor is located in the electronic program table, and detecting a genre of the program from the information; and a cursor control means 110b for setting an initial position of a genre cursor for designating a genre on the genre search screen to the detected genre, in which, upon receiving an instruction to display the genre search screen, the electronic program table creating means extracts programs in the genre detected by the program information acquiring means, creates the genre search screen based on the extracted programs and the initial position of the genre cursor, and causes the display means to display the genre search screen.

## Description

### TECHNICAL FIELD

The present invention relates to a program information search device.

### BACKGROUND ART

As multi-channel and program information providing services spread, television sets and recorders are provided with a function of displaying a list of program information, that is, an electronic program table. The electronic program table is used to check program information, or to make a reservation of recording or to view a desired program. Generally, an electronic program table is displayed by placing received information on programs in a table formed by a time axis and a channel axis perpendicular to the time axis.

Generally, television sets and recorders are provided with a search function which displays a list of programs found by search based on a genre, time and date, or a key word, as a function associated with an electronic program table using program information.

Patent Document 1 describes an electronic program display device having an improved operability of program search in a search display. Specifically, a time/date identifier contained in the search display for searching for programs in a specific broadcast time zone or a specific genre from an electronic program table is arranged and displayed in conformity with a direction of the displayed time axis indicating the broadcast time zone of the electronic program table.

Patent Documents 2 describes an electronic program table display device, which, in a period selection mode or in at least part of an operation mode, allows the user to view, in a shorter time and with a smaller number of instructions (for example, key inputs), program information on programs to be broadcasted in many channels during a desired time period, by scrolling an electronic program table in a direction of arrangement of the order of the channels by a larger movement unit (particularly, in the page unit).

On a genre search screen, for example, the vertical axis is a genre axis in which a list of genres is arranged, and the horizontal axis is a time axis in which time zones of broadcast programs are arranged. When a genre and a time zone are selected using cursors, a list of programs which are in the genre and are to be broadcasted in the time zone is displayed. The order of arrangement of genres in the genre axis is usually fixed. Conventionally, an initial position of a genre cursor in the genre axis, at the time when a genre search function is activated from an electronic program table, is at a genre selected last time when the genre search function was activated previously, or at a genre on top of the genre axis.

On the other hand, regarding such a genre search function, there is a demand to view a list of program information in the same genre as that of a program of interest with a simple operation.

### PRIOR ART DOCUMENT

### PATENT DOCUMENTS

Patent Document 1: Japanese Patent Application Publication No. 2006-217429
Patent Document 2: Japanese Patent Application Publication No. 2006-217431

### SUMMARY OF THE INVENTION

### PROBLEMS TO BE SOLVED BY THE INVENTION

To view a list of program information in the same genre as that of a program of interest, the users need to perform operations such as finding out a genre of the program of interest, activating a genre search function to display a genre search screen, and moving a genre cursor to the genre. In particular, the requirement of performing extra operations, such as checking a genre from program information on the program of interest to find out the genre of the program of interest, and moving the genre cursor to a predetermined genre on the genre search screen is a problem in displaying a list of program information on the same genre as that of the program of interest with a simple operation,.

In view of such circumstances, the present invention provides a program information search device having an improved operability of genre search.

### MEANS FOR SOLVING THE PROBLEMS

In a program information search device of the present invention, programs in the same genre as that of a program where a cursor is located in an electronic program table are searched in genre search.

A program information search device of the present invention is **characterized in that** the program information search device includes: an electronic program table creating means for creating an electronic program table which displays information on programs and allows a program to be selected with a cursor, and a genre search screen which displays information on programs in a genre designated with a genre cursor; a display means for displaying the electronic program table and the genre search screen; a program information acquiring means for acquiring information on a program where the cursor is located in the electronic program table, and detecting a genre of the program from the information; and a cursor control means for setting an initial position of the genre cursor on the genre search screen to the detected genre, in which upon receiving an instruction to display the genre search screen, the electronic program table creating means acquires, from the program information acquiring means, a genre of the program where the cursor is located in the electronic program table at that time, extracts programs in the genre, creates the genre search screen based on the extracted programs and the initial position of the genre cursor set by the cursor control means, and causes the display means to display the genre search screen.

Programs displayed on an initial screen of the genre search screen may include a program where the cursor is located in the electronic program table.

On the genre search screen, the initial position of a cursor for designating a program may be located at a program where the cursor was located in the electronic program table.

In the program information search device of the present invention, programs in the same sub-genre as that of a program where the cursor is located in the electronic program table may be searched in sub-genre search.

In this case, a program information search device of the present invention is **characterized in that** the program information search device includes: an electronic program table creating means for creating an electronic program table which displays information on programs and allows a program to be selected with a cursor, and a sub-genre search screen which displays information on programs in a sub-genre designated with a sub-genre cursor; a display means for displaying the electronic program table and the sub-genre search screen; a program information acquiring means for acquiring information on a program where the cursor is located in the electronic program table, and detecting a sub-genre of the program from the information; and a cursor control means for setting an initial position of the sub-genre cursor on the sub-genre search screen to the detected sub-genre, in which upon receiving an instruction to display the sub-genre search screen, the electronic program table creating means acquires, from the program information acquiring means, a sub-genre of the program where the cursor is located in the electronic program table, extracts programs in the sub-genre, creates the sub-genre search screen based on the extracted programs and the initial position of the sub-genre cursor set by the cursor control means, and causes the display means to display the sub-genre search screen.

Programs displayed on an initial screen of the sub-genre search screen may include a program where the cursor was located in the electronic program table.

On the sub-genre search screen, the initial position of a cursor for designating a program may be located at a program where the cursor was located in the electronic program table.

The sub-genre search screen may allow a genre to be designated, and when no sub-genre is designated in information on a program where the cursor is located in the electronic program table, the initial position of the sub-genre cursor for designating a sub-genre on the sub-genre search screen is set to a genre of the program.

### EFFECTS OF THE INVENTION

According to the present invention, the operability of genre search is improved.

### BRIEF DESCRIPTION OF THE DRAWINGS

Fig. 1 is a block diagram showing an example of a configuration of a digital television broadcast receiver according to an embodiment of the present invention.
Fig. 2 is a view showing an example of an electronic program table.
Fig. 3 is a view showing an example of a genre search screen.
Fig. 4 is a flowchart illustrating a genre search procedure of a digital television broadcast receiver according to the embodiment of the present invention.

### EXPLANATION OF THE REFERENCE NUMERALS

101 Tuner Unit
102 Demultiplexer
103 Program Information Decoder
104 Image/sound Decoder
105 EPG Configuring Unit
106 Screen Synthesizing Unit
107 Display Unit
108 Sound Output Unit
109 Operation Receiving Unit
110 Control Unit
110a Program Information Acquiring Unit
110b Cursor Control Unit
111 Memory
112 Remote Controller Device

### MODE FOR CARRYING OUT THE INVENTION

Hereinafter, a program information search device according to the present invention is described in detail by citing a digital television broadcast receiver as an embodiment thereof, with reference to the accompanying drawings.

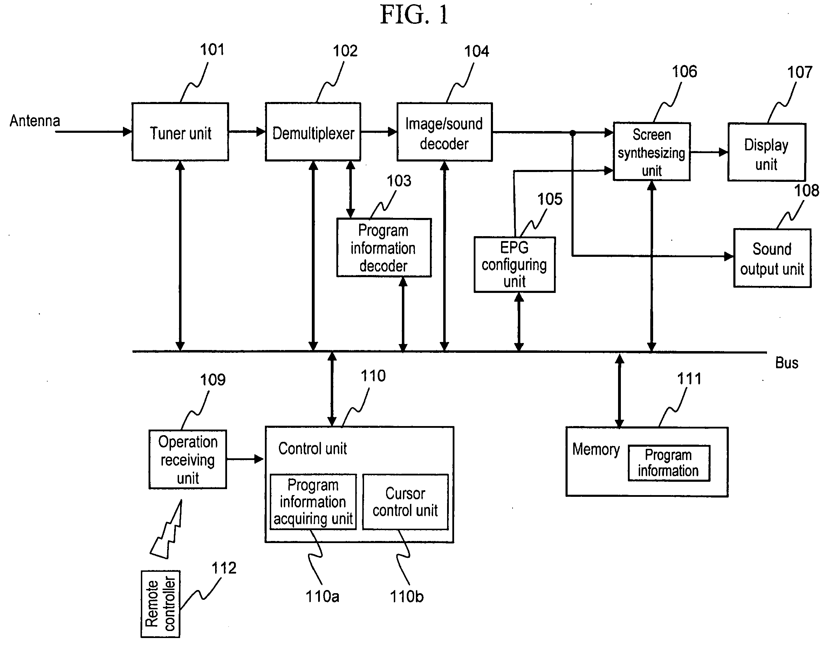

Fig. 1 is a block diagram showing an example of a configuration of a digital television broadcast receiver according to a first embodiment of the present invention.

The digital television broadcast receiver includes a tuner unit 101, a demultiplexer 102, a program information decoder 103, an image/sound decoder 104, an EPG configuring unit 105, a screen synthesizing unit 106, a display unit 107, a sound output unit 108, an operation receiving unit 109, a control unit 110, and a memory 111.

The tuner unit 101 selects an arbitrary broadcast wave out of a plurality of broadcast waves received by a satellite antenna or terrestrial antenna or supplied by a cable broadcast, and supplies the broadcast wave to the demultiplexer 102. The demultiplexer 102 selects, by demultiplexing, a digital signal of an arbitrary channel out of a plurality of channels contained in the selected broadcast wave, supplies the digital signal to the image/sound decoder 104, and supplies program information to the program information decoder 103. The image/sound decoder 104 obtains image/sound signals by decoding the digital signal of the selected channel, supplies the image signal to the screen synthesizing unit 106, and supplies the sound signal to the sound output unit 108. The program information decoder 103 decodes the program information and supplies the decoded program information to the EPG configuring unit 105. The EPG configuring unit 105 configures an EPG screen based on the decoded program information, and supplies the EPG screen to the screen synthesizing unit 106. The screen synthesizing unit 106 synthesizes the program's image signals, the EPG screen, a reservation screen, and the like, and supplies the result of the synthesis to the display unit 107. The display unit 107 is a liquid crystal display or the like, and displays an image of the program, various control screens, and the like. The sound output unit 108 includes an amplifier, a speaker, and the like, and outputs the program's sound, alarm, and the like. The memory 111 stores program information and reservation information.

Those units are controlled by the control unit 110. The control unit 110 receives a control signal from an operation button (not shown) on the remote controller device 112 or on the main body via the operation receiving unit 109, receives the user's operation such as a cursor movement in an electronic program table, and reflects the operation on display of the electronic program table by controlling the screen synthesizing unit 106.

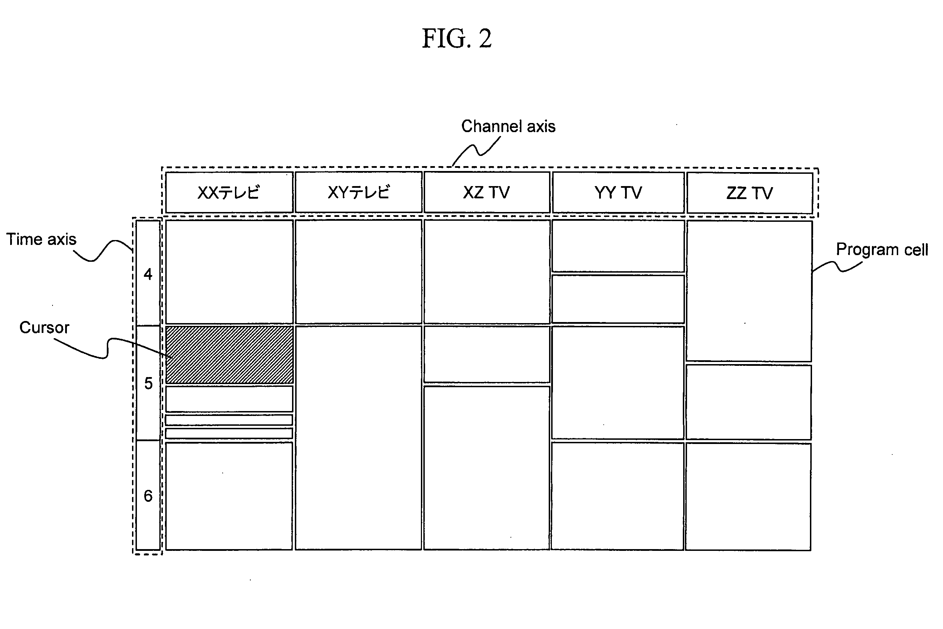

As shown in Fig. 2, the electronic program table is a table consisting of program cells arranged longitudinally and laterally in association with respective broadcast-scheduled programs. The program cell displays information such as the title of a program, the cast of the program, and the like. The electronic program table is formed with a channel axis on the horizontal axis and a time axis on the vertical axis.

The cursor is located at one of the program cells. The cursor is indicated, for example, by displaying a program cell where the cursor is located, in a color different from other program cells where the cursor is not located, or by surrounding the program cell with a frame. In Fig. 2, the cursor is indicated by hatching. The user may move the cursor to a desired program cell by using direction keys provided on the remote controller device 112 or on the main body.

With the electronic program table being displayed, genre search can be performed by operating a predetermined key (genre search key) provided on the remote controller device 112 or on the main body.

The control unit 110 includes a program information acquiring unit 110a and a cursor control unit 110b. When the control unit 110 detects that the genre search key has been pressed, the program information acquiring unit 110a acquires information on a program where the cursor is located in the electronic program table at that time. Information on the program usually contains a 4-bit genre identifier designating a genre of the program. The cursor control unit 110b sets an initial position of a genre cursor designating a genre on the genre search screen, to a genre indicated by the genre identifier. The cursor control unit 110b also sets a cursor for designating a program on the genre search screen, to a program where the cursor was located in the electronic program table when the genre search key was pressed. With a genre of the program determined based on the genre identifier as a search condition, the control unit 110 performs genre search throughout all broadcast-scheduled program information stored in the memory 111, and extracts programs in the genre.

The EPG configuring unit 105 configures the genre search screen based on program information on the programs extracted in genre search. The screen synthesizing unit 106 synthesizes the genre search screen and supplies the genre search screen to the display unit 107. The display unit 107 displays the genre search screen. On the genre search screen, the genre cursor for designating a genre is located at the genre of the program where the cursor was located in the electronic program table. The list of programs contains a program where the cursor was located in the electronic program table, and the cursor for selecting a program is located at a program where the cursor was located in the electronic program table.

On the genre search screen displayed in such a manner, a list of programs in the same genre as that of a program where the cursor was located in the electronic program table is displayed. Thus, programs in the same genre as that of a program of interest can be searched by just pressing the genre search key with the cursor overlapped on the program of interest in the electronic program table, without necessity of checking a genre of the program or designating a genre after invoking a genre search function.

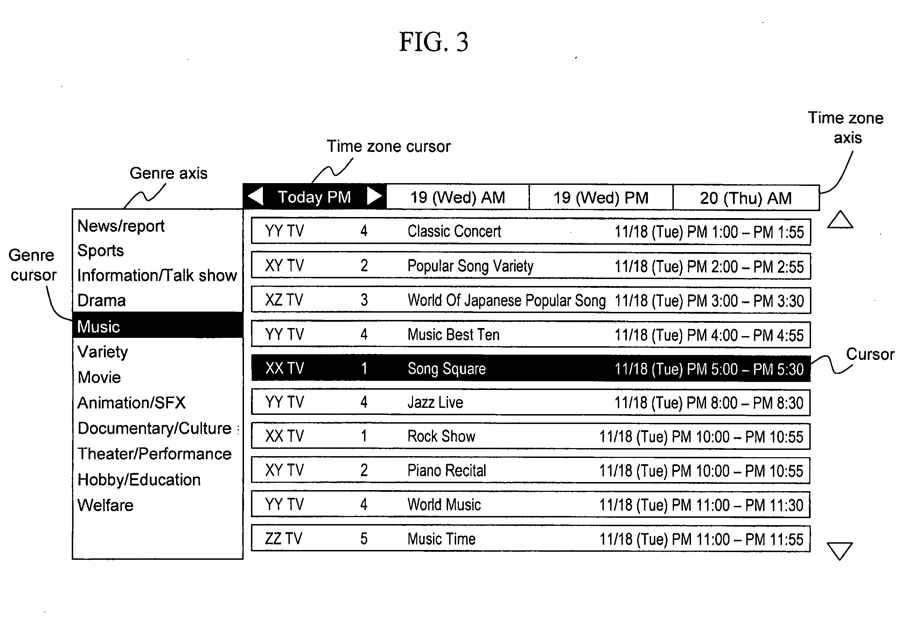

Fig. 3 is a view showing an example of the genre search screen. On the genre search screen, when a broadcast time zone is selected with a time zone cursor on the times axis of the horizontal axis by operating the remote controller device 112 or the like, and a genre is selected with the genre cursor on the genre axis of the vertical axis, a list of programs in the selected genre to be broadcasted in the selected broadcast time zone is displayed in the order of the broadcast time. As described above, when genre search function is activated with the electronic program table displayed, a list of programs in the same genre as that of a program where the cursor is located in the electronic program table is displayed. If the number of programs is so many that all of the programs which should be displayed cannot be displayed on the same screen, hidden programs can be displayed by scrolling the screen with a direction key of the remote controller device 112 or the like. The example of Fig. 3 shows a genre search screen displayed when genre search function is activated with the cursor located at a program titled "Song Square" which is scheduled to be broadcasted by XX TV from 5 PM to 5.30 PM on November 18 (today). Since a genre of the program titled "Song Square" is music, the genre cursor is located at MUSIC on the genre axis, and the time zone cursor is located at a time zone of this afternoon, since "Song Square" is scheduled to be broadcasted this afternoon, and a list of programs in the genre of "MUSIC" scheduled to be broadcasted this afternoon is displayed. The cursor for selecting a program is located at "Song Square".

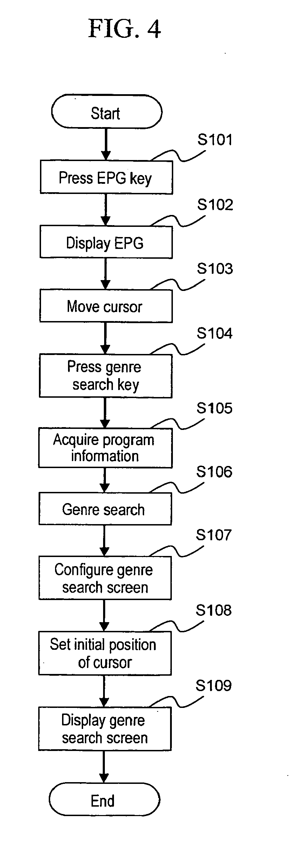

Fig. 4 is a flowchart illustrating a genre search procedure of a digital television broadcast receiver according to an embodiment of the present invention.

In Step S101, the user invokes an electronic program table function by pressing an electronic program table key on the remote controller device 112 or on the main body, or by selecting on the menu select screen.

In Step S102, the display unit 107 displays the electronic program table.

In Step S103, the user moves the cursor to a desired program in the electronic program table by operating direction keys on the remote controller device 112 or on the main body.

In Step S 104, the user invokes a genre search function by pressing a genre search key on the remote controller device 112 or on the main body.

In Step S105, the program information acquiring unit 110a acquires, from the memory 111, program information on a program where the cursor is located in the electronic program table.

In Step S106, with a genre of the program contained in program information acquired by the program information acquiring unit 110a as a search condition, the control unit 110 extracts program information on programs in the same genre out of program information on all broadcast-scheduled programs stored in the memory 111.

In Step S107, the EPG configuring unit 105 configures the genre search screen based on the extracted program information.

In Step S108, the cursor control unit 110b sets an initial position of the cursor on the genre search screen to a program where the cursor was located in the electronic program table.

In Step S109, the screen synthesizing unit 106 synthesizes the genre search screen, and the display unit 107 displays the genre search screen and ends operation.

As a second embodiment, programs in the same sub-genre as that of a program where the cursor is located in the electronic program table may be searched. Program information contains a 4-bit sub-genre identifier as well as a genre identifier. A sub-genre is a subdivision of a genre for further classification. For example, a genre of animation/trick shooting is further subdivided to overseas animation, domestic animation, education animation, SF animation, and the like. On the sub-genre search screen, similarly with the genre search screen, when a broadcast time zone is selected with the time zone cursor on the time axis of the horizontal axis and a sub-genre is selected with the sub-genre cursor on the sub-genre axis of the vertical axis, a list of programs in the selected sub-genre scheduled to be broadcasted in a selected broadcast time zone is displayed in the order of the broadcast time. Sub-genres on the sub-genre axis may include a genre.

In the second embodiment, when the control unit 110 detects that a sub-genre search key provided on the remote controller device 112 or on the main body has been pressed, the program information acquiring unit 1 10a acquires information on a program where the cursor is located in the electronic program table at that time. Information on the program usually contains a 4-bit sub-genre identifier designating the sub-genre of the program. The control unit 110 performs sub-genre search throughout all broadcast-scheduled program information stored in the memory 111, with a sub-genre of the program determined based on the sub-genre identifier as a search condition, and extracts programs in the sub-genre.

The EPG configuring unit 105 configures the sub-genre search screen based on program information on programs extracted by sub-genre search. At that time, cursor control unit 110b sets an initial position of the cursor on the sub-genre search screen to a program where the cursor was located in the electronic program table when the sub-genre search key was pressed. The screen synthesizing unit 106 synthesizes the sub-genre search screen and supplies the same to the display unit 107. The display unit 107 displays the sub-genre search screen.

There may be some programs in which a sub-genre is not designated. When a sub-genre is not designated in program information on a program where the cursor is located in the electronic program table, the cursor may be at a genre of the program if a genre also can be designated on the sub-genre axis of the sub-genre search screen, or sub-genre search may be switched to genre search according to the first embodiment.

The second embodiment may be embodied in combination with the first embodiment.

Although in the embodiments described above, an initial position of the cursor on the genre search screen and the sub-genre search screen is set at a program where the cursor is located in the electronic program table, the initial position may be set at another program such as a program scheduled to be broadcasted at an earliest time (program displayed at the topmost).

### INDUSTRIAL APPLICABILITY

The present invention is applicable to a program information search device.

## Claims

1. A program information search device **characterized in that**
the program information search device comprises:
an electronic program table creating means for creating an electronic program table which displays information on programs and allows a program to be selected with a cursor, and a genre search screen which displays information on programs in a genre designated with a genre cursor;
a display means for displaying the electronic program table and the genre search screen;
a program information acquiring means for acquiring information on a program where the cursor is located in the electronic program table, and detecting a genre of the program from the information; and
a cursor control means for setting an initial position of the genre cursor on the genre search screen to the detected genre, wherein
upon receiving an instruction to display the genre search screen, the electronic program table creating means acquires, from the program information acquiring means, a genre of the program where the cursor is located in the electronic program table at that time, extracts programs in the genre, creates the genre search screen based on the extracted programs and the initial position of the genre cursor set by the cursor control means, and causes the display means to display the genre search screen.

2. The program information search device according to claim 1, **characterized in that** programs displayed on an initial screen of the genre search screen include a program where the cursor is located in the electronic program table.

3. The program information search device according to claim 1, **characterized in that**, on the genre search screen, the initial position of a cursor for designating a program is located at a program where the cursor was located in the electronic program table.

4. A program information search device **characterized in that**
the program information search device comprises:
an electronic program table creating means for creating an electronic program table which displays information on programs and allows a program to be selected with a cursor, and a sub-genre search screen which displays information on programs in a sub-genre designated with a sub-genre cursor;
a display means for displaying the electronic program table and the sub-genre search screen;
a program information acquiring means for acquiring information on a program where the cursor is located in the electronic program table, and detecting a sub-genre of the program from the information; and
a cursor control means for setting an initial position of the sub-genre cursor on the sub-genre search screen to the detected sub-genre, wherein
upon receiving an instruction to display the sub-genre search screen, the electronic program table creating means acquires, from the program information acquiring means, a sub-genre of the program where the cursor is located in the electronic program table, extracts programs in the sub-genre, creates the sub-genre search screen based on the extracted programs and the initial position of the sub-genre cursor set by the cursor control means, and causes the display means to display the sub-genre search screen.

5. The program information search device according to claim 4, **characterized in that** programs displayed on an initial screen of the sub-genre search screen include a program where the cursor was located in the electronic program table.

6. The program information search device according to claim 5, **characterized in that**, on the sub-genre search screen, the initial position of a cursor for designating a program is located at a program where the cursor was located in the electronic program table.

7. The program information search device according to any one of claims 4 to 6, **characterized in that**
the sub-genre search screen allows a genre to be designated, and
when no sub-genre is designated in information on a program where the cursor is located in the electronic program table, the initial position of the sub-genre cursor for designating a sub-genre on the sub-genre search screen is set to a genre of the program.

8. A program information search method **characterized in that**
the program information search method comprises the steps of:
displaying an electronic program table;
detecting activation of a genre search function;
acquiring information on a program where a cursor is located in the electronic program table, and detecting a genre of the program;
setting an initial position of a genre cursor for designating a genre on a genre search screen to the detected genre;
extracting programs in the detected genre;
creating the genre search screen based on the set initial position of the genre cursor and the extracted programs; and
displaying the genre search screen.

9. A program for causing a computer to execute the method according to claim 8.

10. A computer-readable recording medium storing the program for causing a computer to execute the method according to claim 9.
